# EUROPÄISCHE PATENTSCHRIFT

(11) **EP 4 313 649 B1**
(45) Veröffentlichungstag und Bekanntmachung des Hinweises auf die Patenterteilung: **22.10.2025**
(21) Anmeldenummer: 22711034.3
(22) Anmeldetag: 08.03.2022
(51) Int. Cl.: B60K 6/485, B60W 10/08, B60W 20/17, B60W 30/20, F02D 41/00

(54) **WINKELLAGEERFASSUNGSVORRICHTUNG IN EINEM HYBRIDFAHRZEUG**
ANGULAR POSITION DETECTION DEVICE IN A HYBRID VEHICLE
DISPOSITIF DE DÉTECTION DE POSITION ANGULAIRE DANS UN VÉHICULE HYBRIDE

(30) Priorität: 26.03.2021 DE 102021107623
(43) Veröffentlichungstag der Anmeldung: 07.02.2024
(73) Patentinhaber: Bayerische Motoren Werke Aktiengesellschaft, 80809 München (DE)
(72) Erfinder: VEIT, Christian, 4451 Garsten (AT)
(86) Internationale Anmeldenummer: PCT/EP2022/055780
(87) Internationale Veröffentlichungsnummer: WO 2022/200030

(56) Entgegenhaltungen:
- DE-T5- 112015 006 459
- JP-A- 2001 020 797
- KR-A- 20180 032 301

## Beschreibung

Die Erfindung betrifft eine Winkellageerfassungsvorrichtung in einem mit einem Verbrennungsmotor und mit einer Elektromaschine ausgestatteten Hybridfahrzeug.

Die nicht vorveröffentlichte deutsche Patentanmeldung 10 2020 112 471 der Anmelderin betrifft eine Vorrichtung zur Reduktion von Schwingungsanregungen eines Motorgetriebeverbundes in einem Hybridfahrzeug, mit einem Verbrennungsmotor, mit einer Elektromaschine, mit einem Elektromaschinen-Steuergerät, mit einem Verbrennungsmotor-Steuergerät und mit einem Kommunikations-Bus zwischen dem Elektromaschinen-Steuergerät und dem Verbrennungsmotor-Steuergerät, wobei durch entsprechende Programmierung des Elektromaschinen-Steuergeräts ein die Schwingungsanregungen des Motorgetriebeverbundes reduzierendes Drehmoment durch die Elektromaschine erzeugt wird. Dabei wird ein bei stehendem oder bei sich langsam drehendem Verbrennungsmotor ermittelter Winkelbezug (in Form eines konstanten Winkelversatzes) der Elektromaschine zum Verbrennungsmotor berücksichtigt, auf dessen genaue Bestimmung im Detail nicht eingegangen wird.

Die JP 2001 020797 A zeigt eine Antriebsvorrichtung mit einem Verbrennungsmotor und einem über eine Kupplung verbundenen Elektromotor. Die Antriebsvorrichtung weist Mittel zu Erkennung einer Winkelposition von Ausgangswellen beider Antriebsmaschinen auf.

Aus der DE 11 2015 006 459 T5 ist eine Steuervorrichtung für ein Hybridfahrzeug bekannt, in der eine Kurbelwelle eines Verbrennungsmotors mit einem Motorgenerator verbunden ist. Die Steuervorrichtung umfasst einen Kurbelwellenwinkelsensor, der konfiguriert ist einen Winkel einer Kurbelwelle zu ermitteln, einen Rotorwinkelsensor, der konfiguriert ist einen Winkel eines Rotors eines Motorgenerators zu ermitteln, und eine Berechnungseinheit, die konfiguriert ist, zu bestimmen, ob eine Bedingung zur Sicherzustellung, dass ein Fehler einer Phasendifferenz zwischen dem Winkel der Kurbelwelle und dem Winkel des Rotors des Motorgenerators verringert wird, erfüllt ist und um die Phasendifferenz zu berechnen, wenn der Fehler der Phasendifferenz als klein bestimmt wird.

Die KR 2018 0032301 A offenbart ein Verfahren zur Kompensation eines Motorstoppwinkels in einem Hybridfahrzeug, bei dem ein Motormanagementsystem des Hybridfahrzeugs einen Motorstoppwinkel kompensiert, ohne Rotorwinkelinformationen einer Motorkontrolleinheit zu verwenden.

Aufgabe der vorliegenden Erfindung ist es, insbesondere für eine derartige Vorrichtung zur Reduktion von Schwingungsanregungen eines Motorgetriebeverbundes in einem Hybridfahrzeug die Erfassung des Winkelbezugs zu verbessern.

Diese Aufgabe wird durch die unabhängigen Ansprüche gelöst. Vorteilhafte Ausführungsformen werden insbesondere in den abhängigen Ansprüchen beschrieben.

Die Erfindung betrifft eine Winkellageerfassungsvorrichtung in einem mit einem Verbrennungsmotor und einer Elektromaschine ausgestatteten Hybridfahrzeug, mit einem Kurbelwellensensor zu Erfassung einer absoluten Verbrennungsmotor-Winkellage in Bezug auf eine definierte Positionsmarke, mit einem Rotorlagesensor zur Erfassung einer relativen Elektromaschinen-Winkellage bezogen auf einen Referenzpunkt (vorzugsweise Referenzpol, der ein Pol von mehreren gleichartigen Rotor-Polen ist), und mit mindestens einem elektronischen Steuergerät. Das mindestens eine Steuergerät, vorzugsweise ein Verbrennungsmotor-Steuergerät und ein Elektromaschinen-Steuergerät, ist (oder sind) derart ausgestaltet (insbesondere programmiert), dass die absolute Verbrennungsmotor-Winkellage und die relative Elektromaschinen-Winkellage bei stehendem Verbrennungsmotor und bei stehender Elektromaschine erfasst werden und dass basierend auf diesen Winkellagen ein mechanischer Winkelbezug des Verbrennungsmotors zur Elektromaschine als Winkeldifferenz zwischen der Positionsmarke und einem Initial-Referenzpunkt in Form von einem Initial-Referenzpol bestimmt und abgespeichert wird.

Vorzugsweise wird bei einem ersten Stopp oder vor dem ersten Start des Verbrennungsmotors und der Elektromaschine im Sinne einer Lernfunktion ein mechanischer Initial-Winkelbezug bezogen auf den Initial-Referenzpunkt bestimmt.

Bei jedem weiteren Start nach einem ersten Start des Verbrennungsmotors und der Elektromaschine wird vorzugsweise mit dem bereits im Elektromaschinen-Steuergerät gespeicherten Referenzpunkt weitergerechnet, wobei im Fehlerfall als neuer Referenzpunkt der geometrisch nächste Pol gewählt wird.

Außerdem wird nach einer Lernfunktion folgende Abgleichfunktion durchgeführt: Bei jedem weiteren Start und/oder Stopp des Verbrennungsmotors und der Elektromaschine wird der aktuelle mechanische Winkelbezug abgeglichen, wobei ein erster Abgleich-Anteil die Polsprünge zwischen dem Initial-Referenzpunkt und dem neuen Referenzpunkt wiedergibt und wobei ein zweiter Abgleich-Anteil den Mittelwert zwischen dem aktuellen mechanischen Winkelbezug und dem neu berechneten mechanischen Winkelbezug unter Berücksichtigung des ersten Abgleich-Anteils wiedergibt.

Generell ermöglicht der erfindungsgemäße Winkelbezug des Verbrennungsmotors zur Elektromaschine beliebige Anwendungen auf einem der Steuergeräte mit den Winkel/Drehzahlinformationen des anderen Steuergerätes und deren Verrechnungen, wenn ein Verbrennungsmotor-Steuergerät und ein Elektromaschinen-Steuergerät über einen Bus kommunizierend zusammenwirken.

Wenn im Folgenden von einem stehenden Verbrennungsmotor oder einer stehenden Elektromaschine gesprochen wird, ist auch ein zumindest nahezu vorliegendes Stillstehen bzw. ein nur langsames Drehen umfasst.

Der Erfindung liegen folgende Überlegungen zugrunde:
Beispielsweise bei Verbrennungsmotoren (Otto- oder Dieselmotoren) mit im Automatikgetriebe integriertem Kurbelwellenstarter-Generator (KSG) soll in Zukunft die Elektromaschine aktiv zur Verringerung der Motorwankbewegung genutzt werden. Im geplanten Konzept erfolgen die jeweiligen Winkelberechnungen in zwei Steuergeräten, dem Verbrennungsmotor-Steuergerät und dem Elektromaschinen-Steuergerät, die über einen vergleichsweise langsamen Bus verbunden sind. Hiermit beschäftigt sich beispielsweise die eingangs erwähnte deutsche Patentanmeldung 10 2020 112 471.

Da (wenn) die Elektromaschine über keinen Absolutwinkelsensor zur Erfassung der Elektromaschinen-Winkellage verfügt, muss einer der mehreren (beispielsweise 10) gleichartigen Pole der Elektromaschine per Software als Referenzpol ausgewählt werden. Unter gewissen Umständen wird dieser Bezug ungültig und muss für die fehlerfreie Funktion im Verbrennungsmotor-Steuergerät erkannt und korrigiert werden. Hierauf bezieht sich die vorliegende Erfindung.

Der erfindungsgemäß verwendete Rotorlagesensor der Elektromaschine erfasst die Winkellage nur relativ zwischen zwei Polen der Elektromaschine. Insbesondere zur Verwendung einer Elektromaschine als Dämpfung des Verbrennungsmotors muss der Winkelbezug zum Arbeitsspiel des Verbrennungsmotors bekannt sein. Ein zusätzlicher Sensor zur Absolutwinkelerfassung soll eingespart werden. Daher wird erfindungsgemäß eine Software-Lösung (Computerprogrammprodukt im Verbrennungsmotor-Steuergerät und/oder Elektromaschinen-Steuergerät) beschrieben. Die erfindungsgemäße Software-Lösung berücksichtigt den Aspekt, dass die Berechnung des Rotorlagewinkels von einem falschen Referenzpunkt, insbesondere Referenzpol, ausgehen und daher ungültig werden kann, was im Elektromaschinen-Steuergerät nicht erkannt werden kann.

Über eine erfindungsgemäße Lernfunktion wird vorzugsweise bei einem ersten Motor-Abstellvorgang und/oder unmittelbar nach der Synchronisation bei einem Motorstart der Winkelbezug der Elektromaschine zum Arbeitsspiel des Verbrennungsmotors in Form eines initialen mechanischen Winkelbezug des Verbrennungsmotors zur Elektromaschine bestimmt. Auf die genaue Vorgehensweise bei dieser Lernfunktion wird weitern unten näher eingegangen.

Über eine erfindungsgemäße Abgleichfunktion wird im Elektromaschinen-Steuergerät und/oder im Verbrennungsmotor-Steuergerät bei jedem weiteren Start- und/oder Abstellvorgang der initiale mechanische Winkelbezug zwischen den beiden Steuergeräten abgeglichen und in zwei Anteile zerlegt: Einen "Großanteil" in den sogenannten "Polsprüngen" (d.h. Vielfache des geometrischen Winkels zwischen zwei Polen) und einen "Kleinanteil", der Ungenauigkeit oder Störungen in der Winkellage-Erfassung abbildet (Streuung, Spiele, Verspannung im Antriebsstrang Motor/Getriebe). Der Kleinanteil wird gemittelt, um die Genauigkeit zu erhöhen und/oder um Ausreißer durch Störungen zu dämpfen, wodurch eine vergleichsweise langsame Adaption des mechanischen Winkelbezugs erfolgt. Die Polsprünge bzw. die Anzahl der Polsprünge werden sofort in der Ansteuerung berücksichtigt.

Randbedingungen zur Lernfunktion:
- Der Verbrennungsmotor erfasst in bekannter Weise, sobald er synchronisiert hat, eine Verbrennungsmotor-Winkellage zum sogenannten Zünd-OT (OT= oberer Totpunkt) eines ersten Zylinders. Dieser wird als bevorzugte Bezugsmarke verwendet. Die Synchronisierung erfolgt während des Starts über einen Kurbelwellensensor (z.B. induktiver Inkrementengeber über ein Polrad mit 58 Zähnen und einer Zahnlücke über zwei entfallene Zähne) und über einen Nockenwellengeber. Mit dem Ausschalten des Verbrennungsmotors und seines Steuergeräts geht diese Verbrennungsmotor-Winkellage verloren. Die Winkelauflösung beispielsweise über das übliche Polrad beträgt 6 Grad.
   Generelle Anmerkung: Bei Viertaktmotoren unterscheidet man zwischen dem Ladungswechsel-OT zwischen Ausstoß- und Ansaugtakt und dem Zünd-OT zwischen Kompressions- und Arbeitstakt. Der obere Totpunkt des Kolbens eines ersten Zylinders dient als Referenz für die Kurbelwellenlage. Die Verbrennungsmotor-Winkellage bestimmt somit die absolute Kurbelwellenlage zum Zünd-OT (ZOT).
   Für die Erfindung ist zum einen diese absolute Verbrennungsmotor-Winkellage bei stehendem Verbrennungsmotor relevant.
- Im Elektromaschinen-Steuergerät (auch Inverter-Steuergerät genannt) gibt es keinen absoluten Winkelbezug zur Bestimmung der Rotorlage. Zwischen den (beispielsweise 10) Polen des Rotors gibt es eine hoch aufgelöste Winkelmessung (0,1 Grad) durch einen Rotorlagesensor (RLS). Die Pole sind gleichwertig, es gibt keinen absoluten festen Referenzpunkt oder Referenzpol. Der Rotorlagesensor erfasst den Winkel zwischen den Polen permanent.

Im Elektromaschinen-Steuergerät wird erfindungsgemäß bei jedem Start initial vorzugsweise ein Pol softwaremäßig als Referenzpunkt bzw. Referenzpol ausgewählt. Ab diesem Zeitpunkt wird die elektromechanische Elektromaschinen-Winkellage bezogen auf diesen Referenzpunkt bzw. Referenzpol aufsummiert und nach 359 Grad wieder auf Null zurückgesetzt.

Wird die Elektromaschine und damit das Elektromaschinen-Steuergerät ausgeschaltet, wird die aktuelle elektromechanische Winkellage zum initialen Referenzpol bei stehender Elektromaschine im nicht-flüchtigen Speicher (NVRAM) des Elektromaschinen-Steuergeräts abgelegt und beim nächsten Start wieder ausgelesen und gegebenenfalls auch dem Verbrennungsmotor-Steuergerät zur Verfügung gestellt.

Für die Erfindung ist also zum anderen diese relative elektromechanische Elektromaschinen-Winkellage bei stehender Elektromaschine relevant.

Dieser elektromechanische Winkel kann zyklisch, beispielsweise im 200ms Raster, über den Daten-Bus vom Elektromaschinen-Steuergerät an das Verbrennungsmotor-Steuergerät gesendet werden.

### Vorgehensweise der Lernfunktion:

Es folgt eine weitere Beschreibung zur besonders vorteilhaften erfindungsgemäßen Ermittlung des mechanischen Winkelbezugs des Verbrennungsmotors zur Elektromaschine. Dieser mechanische Winkelbezug ist die (bei fehlerfreiem Betrieb konstante) geometrische Zuordnung des Verbrennungsmotors zur Elektromaschine. Er wird vorzugsweise als Winkeldifferenz zwischen vorzugsweise dem Zünd-OT (oder einer anderen definierten absoluten Kurbelwellenlage des Verbrennungsmotors) als Bezugsmarke und dem initialen Referenzpunkt bzw. Referenzpol der Elektromaschine definiert. Dabei wird angenommen, dass das Elektromaschinen-Steuergerät eine fehlerfreie polbezogene elektromechanische Winkellage-Berechnung durchführt.

Dazu wird dieser mechanische Winkelbezug initial im Zuge einer entsprechend programmierten Lernfunktion (Computerprogrammprodukt) im Verbrennungsmotor-Steuergerät und/oder im Elektromaschinen-Steuergerät insbesondere bei einem erstmaligen Motorstopp basierend auf der oben beschriebenen relativen Elektromaschinen-Winkellage bei stehender Elektromaschine und auf der oben beschriebenen absoluten Verbrennungsmotor-Winkellage bei stehendem Verbrennungsmotor berechnet und nichtflüchtig abgespeichert.

Die Lernfunktion kann auch über die Diagnose-Schnittstelle nach einem Werkstattbesuch getriggert werden (z. B. erforderlich, nach dem Durchdrehen des Motors oder nach Öffnen des Motor-Getriebeverbands).

Die Abgleichfunktion hat drei Aufgaben und wird bei jedem Motorstopp durchlaufen (im Folgenden wird von einem Referenzpol als Referenzpunkt ausgegangen):
- Die Genauigkeit des mechanischen Winkelbezugs zwischen Verbrennungsmotor und Elektromaschine soll über Mittelung von Abweichungen vom initialen mechanischen Winkelbezug bei jedem Abstellvorgang verbessert werden.
- Falsche Berechnungen des mechanischen Winkelbezugs in Folge eines im Elektromaschinen-Steuergerät gewählten "falschen" Referenzpols werden korrigiert, indem sogenannte Polsprünge bzw. Polsprungfehler (schnelle Winkelanpassung über Vielfache von 36Grad bei 10 Polen) erfasst werden. Ein "falscher" Referenzpol ist dabei ein gewählter Referenzpol, der nicht der initiale Referenzpol ist.
- Nach einem Werkstattbesuch ohne Diagnosejob zum erneuten Ausführen der Lernfunktion kann ein bis zu 18 Grad (bzw. allgemein halber Winkel benachbarter Pole) Winkelfehler entstehen, der dann - langsam über die Mittelung - ausgelernt wird ("zweiter Abgleich-Anteil" oder "Kleinanteil", siehe oben). Größere Winkelabweichungen werden als Polsprünge "sofort" korrigiert ("erster Abgleich-Anteil" oder "Großanteil", siehe oben).

In einer bevorzugten Weiterbildung der Erfindung wird im Verbrennungsmotor-Steuergerät vor dem Motorstart die elektromechanische Elektromaschinen-Winkellage bei stehender Elektromaschine vom Elektromaschinen-Steuergerät ausgelesen und zwischengespeichert. Dann zählt das Verbrennungsmotor-Steuergerät die Impulse des Inkrementengebers, bis das erste Mal die Lücke im Polrad bzw. der Zünd-OT erkannt wird, und merkt sich diese Impuls-Zahl. Nach der Synchronisation wird vom Verbrennungsmotor-Steuergerät basierend auf der zuvor gezählten Impuls-Zahl der Kurbelwellenwinkel vor dem Motorstart zurückberechnet. Dadurch liegt bereits unmittelbar nach dem Motorstart rückwirkend die oben beschriebene Verbrennungsmotor-Winkellage bei stehendem Verbrennungsmotor vor. Basierend auf dieser zurückgerechneten Verbrennungsmotor-Winkellage bei stehendem Verbrennungsmotor und der zwischengespeicherten elektromechanischen Elektromaschinen-Winkellage bei stehender Elektromaschine wird der oben beschriebene mechanische Winkelbezug zwischen der Elektromaschine und dem Verbrennungsmotor schon vor einem Motorstopp berechnet.

Die Erfindung wird vorzugsweise zur Befähigung einer Anregungsreduktion mittels getriebeinterner Elektromaschinen-Ansteuerung bei Hybrid-Antrieben beispielsweise mit Otto- oder Dieselmotoren angewendet.

Im Weiteren wird die Erfindung anhand eines Ausführungsbeispiels näher beschrieben. Dabei zeigt
- Fig. 1: schematisch wesentliche Komponenten und Größen des gesamten Motorgetriebeverbundes und
- Fig. 2: eine schematische Darstellung der Wirkungsweise der erfindungsgemäßen Vorrichtung.

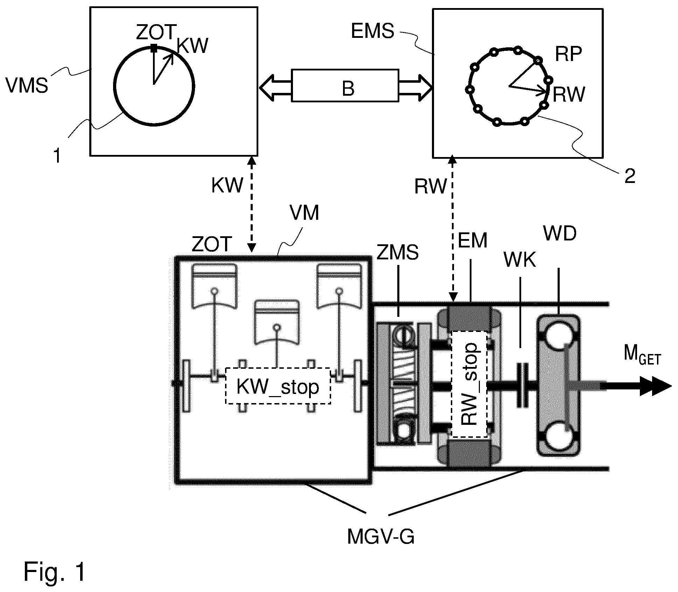

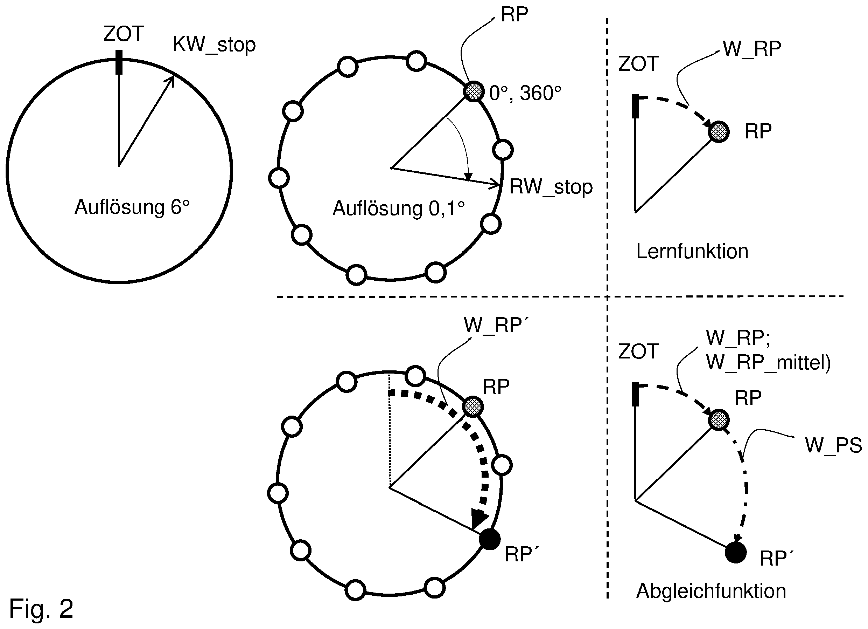

In Fig. 1 ist ein Motorgetriebeverbund MGV in einem Hybridfahrzeug mit einem Verbrennungsmotor VM, mit einer Elektromaschine EM, mit einem Elektromaschinen-Steuergerät EMS, mit einem Verbrennungsmotor-Steuergerät VMS und mit einem Kommunikations-Bus B zwischen dem Elektromaschinen-Steuergerät EMS und dem Verbrennungsmotor-Steuergerät VMS dargestellt. Der Motorgetriebeverbund MGV ist in einem Motorgetriebeverbund-Gehäuse MGV-G untergebracht, das weiterhin ein Zweimassenschwungrad ZMS, eine Wandlerkupplung WK und einen Drehmomentwandler WD für ein Automatikgetriebe (Getriebeeingangsmoment M_{GET}) enthalten kann. Insbesondere der Verbrennungsmotor VM und die Elektromaschine EM sind schwingungsrelevant mit dem Motorgetriebeverbund-Gehäuse MGV-G verbunden. Die Elektromaschine EM kann ein Gesamtdrehmoment erzeugen, das aus einem Antriebsgrundmoment und einem die Schwingungsanregungen des Motorgetriebeverbundes reduzierenden Drehmoment besteht. Dazu ist die Kenntnis des mechanischen Winkelbezugs zwischen dem Verbrennungsmotor und der Elektromaschine erforderlich, auf dessen Berechnung im Folgenden eingegangen wird und anhand von Fig. 2 näher erläutert wird.

In Fig. 2 ist näher dargestellt, wie durch entsprechende Ausgestaltung bzw. Programmierung des Elektromaschinen-Steuergeräts EMS und/oder des Verbrennungsmotor-Steuergeräts insbesondere bei stehendem Verbrennungsmotor VM und stehender Elektromaschine EM der mechanische Winkelbezug des Verbrennungsmotors VM zur Elektromaschine EM, also der initiale mechanische Winkelbezug W_RP der Lernfunktion oder der gemittelte mechanische Winkelbezug W_RP_mittel der Abgleichfunktion, ermittelbar ist:
In Fig. 1 und Fig. 2 sind schematisch eine erste Winkellageerfassungsfunktion 1 zur Erfassung einer absoluten Verbrennungsmotor-Winkellage KW in Bezug auf den Zünd-OT ZOT als definierte Positionsmarke und eine zweite Winkellageerfassungsfunktion 2 zur Erfassung einer relativen Elektromaschinen-Winkellage RW bezogen auf einen Referenzpunkt - hier vorzugsweise auf einen Referenzpol, entweder den Initial-Referenzpol RP oder einen späteren neuen Referenzpol RP', dargestellt. Der Initial-Referenzpol RP ist ein erstmals erkannter Referenzpol während einer Lernfunktion nach einem ersten Start. Ein Referenzpol ist grundsätzlich ein vom Elektromaschinen-Steuergerät EMS gewählter erster Pol von mehreren gleichartigen Rotor-Polen, hier 10 Pole.

Erfindungsgemäß werden bei stehendem Verbrennungsmotor VM und stehender Elektromaschine EM vom Verbrennungsmotor-Steuergerät VMS die absolute Verbrennungsmotor-Winkellage KW_stop und vom Elektromaschinen-Steuergerät EMS die relative Elektromaschinen-Winkellage RW_stop erfasst. Die Steuergerät EMS und VMS tauschen über den Bus B zyklisch Daten aus. In mindestens einem der Steuergeräte VMS und EMS wird basierend auf diesen Winkellagen RW_stop und KW_stop ein mechanischer Winkelbezug W_RP oder W_RP_mittel des Verbrennungsmotors VM zur Elektromaschine EM als Winkeldifferenz zwischen der Positionsmarke ZOT und dem Initial-Referenzpol RP bestimmt und abgespeichert wird.

Vorzugsweise wird der mechanische Initial-Winkelbezug W_RP bei einem ersten Start oder Stopp des Verbrennungsmotors VM und der Elektromaschine EM im Sinne einer Lernfunktion bezogen auf den Initial-Referenzpol RP bestimmt.

In einer Weiterbildung der Erfindung wird bei jedem weiteren Start nach einem ersten Start des Verbrennungsmotors VM in der Elektromaschine EM der nicht flüchtig (z.B. in einem NVRAM) gespeicherte Referenzpol RP gewählt, der aber im Fehlerfall nicht der tatsächliche Referenzpol, sondern ein anderer Pol sein kann, der dann geometrisch als erster Pol erkannt wird. Dieser Pol wird als neuer Referenzpol RP' bezeichnet.

Erklärung: im Elektromaschinen-Steuergerät wird der letzte Referenzpol beim "Einschlafen" des Steuergerätes gespeichert. Beim "Aufwachen" des Steuergerätes wird der gespeicherte Referenzpol ausgelesen und von diesem Pol aus, der aber tatsächlich ein neuer Referenzpol RP' sein kann, weitergerechnet. So lange sich der Kurbelwellen-Elektromaschinen-Verbund während des "Schlafens" nicht weitergedreht hat, wird kein Polsprung auftreten. Funktioniert das Auslesen des NVRAM Wertes nicht oder wurde die Kurbelwelle bzw. die Elektromaschine weitergedreht, geht das Elektromaschinen-Steuergerät vom Initial-Referenzpol RP aus, real ist es aber der neue Referenzpol RP', der durch die erfindungsgemäße Abgleichfunktion über erkannte Polsprünge korrigiert wird.

Nach einer Lernfunktion folgt eine Abgleichfunktion, wobei bei jedem weiteren Start und/oder Stopp des Verbrennungsmotors VM und der Elektromaschine EM der aktuelle mechanische Winkelbezug W_RP oder W_RP_mittel (alt) abgeglichen wird. Es werden im Verbrennungsmotor-Steuergerät VMS ein erster und ein zweiter Abgleich-Anteil berechnet. Dabei gibt ein erster Abgleich-Anteil W_PS die Polsprünge PS, z.B. in Form der Anzahl der Polsprünge, zwischen dem Initial-Referenzpol RP und dem neuen Referenzpol RP' wieder. Weiterhin gibt ein zweiter Abgleich-Anteil W_RP_mittel (neu) den Mittelwert zwischen dem aktuellen mechanischen Winkelbezug W_RPᵢ (:=W_RP oder W_RP_mittel (alt)) und dem neu berechneten mechanischen Winkelbezug W_RPᵢ₊₁=W_RP'-W_PS wieder. Dabei ist W_RP' die zunächst "falsche" ermittelte Winkeldifferenz zwischen ZOT und dem neuen Referenzpol RP', wenn dieser nicht gleich dem Initial-Referenzpol ist.

Die Abgleichfunktion kann bei jedem Stopp des Verbrennungsmotors VM und der Elektromaschine EM nach einer Lernfunktion durchgeführt werden.

In vorteilhafter Ausgestaltung der Erfindung kann aber die Abgleichfunktion im Verbrennungsmotor-Steuergerät VMS auch unmittelbar nach einem Start des Verbrennungsmotors VM durchgeführt werden, indem vor dem Start des Verbrennungsmotors VM die elektromechanische Elektromaschinen-Winkellage RW_stop bei stehender Elektromaschine EM zwischengespeichert wird, die Impulse des Kurbelwellensensors bis zur Erkennung der definierten Positionsmarke ZOT gezählt werden und basierend auf der gezählten Impuls-Zahl die Verbrennungsmotor-Winkellage KW vor dem Motorstart zurückberechnet wird. Basierend auf dieser zurückberechneten Verbrennungsmotor-Winkellage KW_stop bei stehendem Verbrennungsmotor VM und auf der zwischengespeicherten elektromechanischen Elektromaschinen-Winkellage RW_stop bei stehender Elektromaschine EM kann der mechanische Winkelbezug W_RP oder W_RP_mittel schon vor einem Stopp berechnet werden.

## Patentansprüche

1. Winkellageerfassungsvorrichtung in einem mit einem Verbrennungsmotor (VM) und einer Elektromaschine (EM) ausgestatteten Hybridfahrzeug, mit einem Kurbelwellensensor zu Erfassung einer absoluten Verbrennungsmotor-Winkellage (KW) in Bezug auf eine definierte Positionsmarke (ZOT), mit einem Rotorlagesensor zur Erfassung einer relativen Elektromaschinen-Winkellage (RW) bezogen auf einen Referenzpunkt in Form von einem Referenzpol (RP; RP') aus mehreren gleichartigen Rotor-Polen, und mit mindestens einem elektronischen Steuergerät (EMS, VMS) dergestalt, dass die absolute Verbrennungsmotor-Winkellage (KW_stop) und die relative Elektromaschinen-Winkellage (RW_stop) bei stehendem oder zumindest nur langsam drehendem Verbrennungsmotor (VM) und bei stehender oder zumindest nur langsam drehender Elektromaschine (EM) erfasst werden und dass basierend auf diesen Winkellagen (RW_stop, KW_stop) ein mechanischer Winkelbezug (W_RP; W_RP_mittel) des Verbrennungsmotors (VM) zur Elektromaschine (EM) als Winkeldifferenz zwischen der Positionsmarke (ZOT) und einem Initial-Referenzpunkt (RP) bestimmt und abgespeichert wird,
wobei bei jedem weiteren Start und/oder Stopp des Verbrennungsmotors (VM) und der Elektromaschine (EM) nach einer Lernfunktion der aktuelle mechanische Winkelbezug (W_RP; W_RP_mittel) abgeglichen wird,
**dadurch gekennzeichnet, dass** ein erster Abgleich-Anteil (W_PS) die Polsprünge (PS) zwischen dem Initial-Referenzpol (RP) und dem neuen Referenzpol (RP') wiedergibt und, dass
- ein zweiter Abgleich-Anteil den neu berechneten mechanischen Winkelbezug (W_RPᵢ₊₁) unter Berücksichtigung des ersten Abgleich-Anteils (W_PS) wiedergibt, oder, dass
- ein zweiter Abgleich-Anteil den Mittelwert zwischen dem aktuellen mechanischen Winkelbezug (W_RP_mittel) und dem neu berechneten mechanischen Winkelbezug (W_RPᵢ₊₁) unter Berücksichtigung des ersten Abgleich-Anteils (W_PS) wiedergibt.

2. Winkellageerfassungsvorrichtung nach Anspruch 1, **dadurch gekennzeichnet, dass** bei einem ersten Stopp des Verbrennungsmotors (VM) und der Elektromaschine (EM) im Sinne einer Lernfunktion ein mechanischer Initial-Winkelbezug (W_RP) bezogen auf den Initial-Referenzpunkt, der ein Initial-Referenzpol (RP) sein kann, bestimmt wird.

3. Winkellageerfassungsvorrichtung nach einem der vorangegangenen Ansprüche, **dadurch gekennzeichnet, dass** bei jedem weiteren Start nach einem ersten Start des Verbrennungsmotors (VM) und der Elektromaschine (EM) als neuer Referenzpol (RP') der geometrisch erste erkannte Pol in der Annahme, er sei der Initial-Referenzpol (RP), gewählt wird.

4. Winkellageerfassungsvorrichtung nach einem der vorangegangenen Ansprüche, **dadurch gekennzeichnet, dass** die Abgleichfunktion bei jedem Stopp des Verbrennungsmotors (VM) und der Elektromaschine (EM) nach einer Lernfunktion durchgeführt wird.

5. Winkellageerfassungsvorrichtung nach einem der vorangegangenen Ansprüche, **dadurch gekennzeichnet, dass** die Abgleichfunktion im Verbrennungsmotor-Steuergerät (VMS) unmittelbar nach einem Start des Verbrennungsmotors (VM) durchgeführt wird, indem vor dem Start des Verbrennungsmotors (VM) die elektromechanische Elektromaschinen-Winkellage (RW_stop) bei stehender Elektromaschine (EM) zwischengespeichert wird, die Impulse des Kurbelwellensensors bis zur Erkennung der definierten Positionsmarke (ZOT) gezählt werden und basierend auf der gezählten Impuls-Zahl die Verbrennungsmotor-Winkellage (KW) vor dem Motorstart zurückberechnet wird, um schließlich basierend auf dieser zurückberechneten Verbrennungsmotor-Winkellage (KW_stop) bei stehendem Verbrennungsmotor (VM) und auf der zwischengespeicherten elektromechanischen Elektromaschinen-Winkellage (RW_stop) bei stehender Elektromaschine (EM) den mechanischen Winkelbezug (W_RP; W_RP_mittel) zwischen der Elektromaschine (EM) und dem Verbrennungsmotor (VM) schon vor einem Stopp zu berechnen.

6. Hybridfahrzeug mit einer Vorrichtung nach einem der vorangegangenen Ansprüche 1 bis 5.

## Claims

1. Angle position detection device in a hybrid vehicle equipped with an internal combustion engine (ICE) and an electric machine (EM), comprising a crankshaft sensor for detecting an absolute internal combustion engine angle position (KW) with respect to a defined position marker (TDC), a rotor position sensor for detecting a relative electric machine angle position (RW) with respect to a reference point in the form of a reference pole (RP; RP') from several identical rotor poles, and at least one electronic control unit (EMS, VMS) such that the absolute internal combustion engine angle position (KW_stop) and the relative electric machine angle position (RW_stop) are detected when the internal combustion engine (ICE) is stationary or at least slowly rotating and when the electric machine (EM) is stationary or at least slowly rotating, and that based on these angle positions (RW_stop, KW_stop), a mechanical angle reference (W_RP; W_RP_mean) of the internal combustion engine (ICE) to the electric machine (EM) is determined and stored as an angle difference between the position marker (TDC) and an initial reference point (RP), wherein
at each subsequent start and/or stop of the internal combustion engine (ICE) and the electric machine (EM), the current mechanical angle reference (W_RP; W_RP_mean) is adjusted according to a learning function, **characterized in that** a first adjustment component (W_PS) represents the pole jumps (PS) between the initial reference pole (RP) and the new reference pole (RP'), and that
• a second adjustment component represents the newly calculated mechanical angle reference (W_RPi+1) taking into account the first adjustment component (W_PS), or that
• a second adjustment component represents the mean value between the current mechanical angle reference (W_RP_mean) and the newly calculated mechanical angle reference (W_RPi+1) taking into account the first adjustment component (W_PS).

2. Angle position detection device according to claim 1, **characterized in that** during a first stop of the internal combustion engine (ICE) and the electric machine (EM), a mechanical initial angle reference (W_RP) related to the initial reference point, which can be an initial reference pole (RP), is determined in the sense of a learning function.

3. Angle position detection device according to one of the preceding claims, **characterized in that** at each subsequent start after a first start of the internal combustion engine (ICE) and the electric machine (EM), the geometrically first recognized pole is selected as the new reference pole (RP') assuming it to be the initial reference pole (RP).

4. Angle position detection device according to one of the preceding claims, **characterized in that** the adjustment function is performed at each stop of the internal combustion engine (ICE) and the electric machine (EM) according to a learning function.

5. Angle position detection device according to one of the preceding claims, **characterized in that** the adjustment function is performed in the internal combustion engine control unit (VMS) immediately after a start of the internal combustion engine (ICE) by temporarily storing the electromechanical electric machine angle position (RW_stop) with the electric machine (EM) stationary before starting the internal combustion engine (ICE), counting the pulses of the crankshaft sensor until the defined position marker (TDC) is recognized, and based on the counted pulse number, back-calculating the internal combustion engine angle position (KW) before the engine start, to finally calculate the mechanical angle reference (W_RP; W_RP_mean) between the electric machine (EM) and the internal combustion engine (ICE) even before a stop, based on this back-calculated internal combustion engine angle position (KW_stop) with the internal combustion engine (ICE) stationary and on the temporarily stored electromechanical electric machine angle position (RW_stop) with the electric machine (EM) stationary.

6. Hybrid vehicle with a device according to one of the preceding claims 1 to 5.

## Revendications

1. Dispositif de détection de position angulaire dans un véhicule hybride équipé d'un moteur à combustion interne (MCI) et d'une machine électrique (ME), comprenant un capteur de vilebrequin pour détecter une position angulaire absolue du moteur à combustion interne (KW) par rapport à un repère de position défini (PMH), un capteur de position du rotor pour détecter une position angulaire relative de la machine électrique (RW) par rapport à un point de référence sous forme d'un pôle de référence (RP ; RP') parmi plusieurs pôles de rotor identiques, et au moins une unité de contrôle électronique (EMS, VMS) de telle sorte que la position angulaire absolue du moteur à combustion interne (KW_stop) et la position angulaire relative de la machine électrique (RW_stop) sont détectées lorsque le moteur à combustion interne (MCI) est à l'arrêt ou au moins en rotation lente et lorsque la machine électrique (ME) est à l'arrêt ou au moins en rotation lente, et que sur la base de ces positions angulaires (RW_stop, KW_stop), une référence angulaire mécanique (W_RP ; W_RP_moyen) du moteur à combustion interne (MCI) par rapport à la machine électrique (ME) est déterminée et stockée comme une différence angulaire entre le repère de position (PMH) et un point de référence initial (RP), dans lequel
à chaque démarrage et/ou arrêt ultérieur du moteur à combustion interne (MCI) et de la machine électrique (ME), la référence angulaire mécanique actuelle (W_RP ; W_RP_moyen) est ajustée selon une fonction d'apprentissage, **caractérisé en ce qu'**une première composante d'ajustement (W_PS) représente les sauts de pôle (PS) entre le pôle de référence initial (RP) et le nouveau pôle de référence (RP'), et que
• une deuxième composante d'ajustement représente la nouvelle référence angulaire mécanique calculée (W_RPi+1) en tenant compte de la première composante d'ajustement (W_PS), ou que
• une deuxième composante d'ajustement représente la valeur moyenne entre la référence angulaire mécanique actuelle (WW_RP_moyen) et la nouvelle référence angulaire mécanique calculée (W_RPi+1) en tenant compte de la première composante d'ajustement (W_PS).

2. Dispositif de détection de position angulaire selon la revendication 1, **caractérisé en ce que** lors d'un premier arrêt du moteur à combustion interne (MCI) et de la machine électrique (ME), une référence angulaire mécanique initiale (W_RP) liée au point de référence initial, qui peut être un pôle de référence initial (RP), est déterminée dans le sens d'une fonction d'apprentissage.

3. Dispositif de détection de position angulaire selon l'une des revendications précédentes, **caractérisé en ce qu'**à chaque démarrage ultérieur après un premier démarrage du moteur à combustion interne (MCI) et de la machine électrique (ME), le premier pôle géométriquement reconnu est sélectionné comme nouveau pôle de référence (RP') en supposant qu'il s'agit du pôle de référence initial (RP).

4. Dispositif de détection de position angulaire selon l'une des revendications précédentes, **caractérisé en ce que** la fonction d'ajustement est effectuée à chaque arrêt du moteur à combustion interne (MCI) et de la machine électrique (ME) selon une fonction d'apprentissage.

5. Dispositif de détection de position angulaire selon l'une des revendications précédentes, **caractérisé en ce que** la fonction d'ajustement est effectuée dans l'unité de contrôle du moteur à combustion interne (VMS) immédiatement après un démarrage du moteur à combustion interne (MCI) en stockant temporairement la position angulaire électromécanique de la machine électrique (RW_stop) avec la machine électrique (ME) à l'arrêt avant le démarrage du moteur à combustion interne (MCI), en comptant les impulsions du capteur de vilebrequin jusqu'à la reconnaissance du repère de position défini (PMH), et en se basant sur le nombre d'impulsions comptées, en calculant rétroactivement la position angulaire du moteur à combustion interne (KW) avant le démarrage du moteur, pour finalement calculer la référence angulaire mécanique (W_RP ; W_RP_moyen) entre la machine électrique (ME) et le moteur à combustion interne (MCI) même avant un arrêt, sur la base de cette position angulaire du moteur à combustion interne calculée rétroactivement (KW_stop) avec le moteur à combustion interne (MCI) à l'arrêt et sur la position angulaire électromécanique de la machine électrique temporairement stockée (RW_stop) avec la machine électrique (ME) à l'arrêt.

6. Véhicule hybride avec un dispositif selon l'une des revendications 1 à 5 précédentes.
